# EUROPEAN PATENT SPECIFICATION

(11) **EP 2 505 596 B1**
(45) Date of publication and mention of the grant of the patent: **02.03.2016**
(21) Application number: 11464025.3
(22) Date of filing: 15.12.2011
(51) Int. Cl.: C08F 292/00, C08J 3/00, C08J 5/00, B82Y 30/00, C08F 2/44

(54) **PROCESS FOR THE OBTAINING OF HYBRID POLYMER INORGANIC-ORGANIC NANOCOMPOSITES BASED ON NATURAL OR SYNTHETIC ZEOLITES AND POLYACRYLONITRILE**
VERFAHREN ZUM ERHALTEN VON ANORGANISCHEN-ORGANISCHEN HYBRIDBPOLYMER-NANOVERBUNDSTOFFEN BASIEREND AUF NATÜRLICHEN ODER SYNTHETISCHEN ZEOLITEN UND POLYACRYLONITRIL
PROCÉDÉ POUR OBTENIR DES NANOCOMPOSITES POLYMÈRES INORGANIQUES-ORGANIQUES HYBRIDES À BASE DE ZÉOLITES NATURELLES OU SYNTHÉTIQUES ET DE POLYACRYLONITRILE

(30) Priority: 29.03.2011 RO 201100273
(43) Date of publication of application: 03.10.2012
(73) Proprietor: Institutul National de Cercetare Dezvoltare Pentru Chimie si Petrochimie - Icechim, Bucuresti, Sectorul6, 060021 (RO)
(72) Inventor: Sarbu, Andrei, Buceresti, Sector 6 (RO); Ciripoiu, Anita Laura, Bucuresti, Sectorul 6 (RO); Lungu, Anamaria, Sinaia, jud Prahova (RO); Bacalum, Fanica, Buceresti, Sectorul 6 (RO); Sarbu, Liliana, Bucuresti, Sectorul 6 (RO); Bombos, Mihaela Mariana, Bucuresti, Sectorul 6 (RO)

(56) References cited:
- Anita-Laura Radu ET AL: "Influence of the Ultrasonic Field on the Template Polymerization of Acrylonitrile in Inorganic Structures", , 1 January 2009 (2009-01-01), pages 399-403, XP055151626, Retrieved from the Internet: URL:http://www.revmaterialeplastice.ro/pdf /RADU_A_4.pdf [retrieved on 2014-11-07]
- Andrei A Sarbu ET AL: "INORGANIC-ORGANIC HYBRIDS FOR ADVANCED COMPOSITES OBTAINING", SCIENTIFIC STUDY & RESEARCH, Vol. IX (2), 29 June 2008 (2008-06-29), pages 229-234, XP055151654, Colloque Franco-Roumain de Chimie Appliquée - COFrRoCA 2008, Bacau, Romania Retrieved from the Internet: URL:http://www.cofrroca.org/uploads/smarts ection/19_Volum_COFRROCA_2008.pdf [retrieved on 2014-11-07]
- Anita-Laura Radu ET AL: "New polymer inorganic-organic nano hybrids obtained through radical polymerization", , 2 March 2011 (2011-03-02), XP055151656, Retrieved from the Internet: URL:http://www.romnet.net/ro/seminar16mart ie2010/files/postere/upload/Anita-Laura_RA DU_Poster_Anita_Radu_Academie.pdf [retrieved on 2014-11-07]
- Anita-Laura Radu ET AL: "NEW POLYMER INORGANIC-ORGANIC HYBRIDS OBTAINED THROUGH RADICAL POLYMERIZATION", U.P.B. Sci. Bull., Series B, 2 March 2011 (2011-03-02), pages 1-14, XP055151306, Retrieved from the Internet: URL:http://www.scientificbulletin.upb.ro/r ev_docs_arhiva/full80410.pdf [retrieved on 2014-11-06]
- JUNG K T ET AL: "The preparation of isotactic polyacrylonitrile using zeolite", MATERIALS LETTERS, NORTH HOLLAND PUBLISHING COMPANY. AMSTERDAM, NL, vol. 53, no. 3, 1 March 2002 (2002-03-01), pages 180-185, XP004336127, ISSN: 0167-577X, DOI: 10.1016/S0167-577X(01)00473-6
- PARK C ET AL: "Dispersion of single wall carbon nanotubes by in situ polymerization under sonication", CHEMICAL PHYSICS LETTERS, ELSEVIER BV, NL, vol. 364, no. 3-4, 4 October 2002 (2002-10-04), pages 303-308, XP002331311, ISSN: 0009-2614, DOI: 10.1016/S0009-2614(02)01326-X

## Description

### Field of the Invention

The present invention relates to a new obtaining process for hybrid polymer inorganic-organic nanocomposites based on natural or synthetic zeolites and polyacrylonitrile, with new applications in the obtaining of materials with high resistance to compression.

### Background of the Invention

Several methods to produce hybrid polymer inorganic-organic nanocomposites based on vinyl polymers and zeolites are known:
- A first method consists in cationic polymerization of vinyl monomers in zeolite pores [1,2,3,4]. Being a cationic polymerization the method has the disadvantage that it is necessary to work with very pure substances and in anhydrous medium, which complicates the equipment and increases the products cost. In addition it is not ensured the compositional homogeneity of the new hybrid materials, because the monomers hardly penetrate the zeolite micropores
- A second method consists in radical polymerization of vinyl monomers: vinyl acetate, styrene etc., in zeolite pores [5,6]. This method avoids working with very pure substances and in anhydrous medium, but as the first method it does not ensures the compositional homogeneity of hybrids, because the monomers difficulty to penetrate the zeolite micropores.
- A third method consists in cationic polymerization in the pores of zeolites, previously treated with substances that facilitate the cationic polymerization [7]. The method presents the disadvantage of cationic polymerization methods and also has the disadvantage that introduces the treatment phase, with additional costs related to these substance price, very expensive.
- A fourth method consists in the absorption of acrylonitrile vapors in special types of zeolites: Na-Y or Na-β, followed by the suspension of acrylonitrile loaded zeolites in n- hexane, containing AIBN, and polymerized 100 hours at 60 °C, without ultrasonication [8]. The drawback of this methods is that the content of polyacrylonitrile in the zeolite pores is low, but this is not important for the purpose of the methode: obtaining not of zeolite-polyacrilonitrile composite, but of isotactic polyacrylonitrile, by the subsequent dissolution of the inorganic matrix in hydrofluoric acid. In addition the polymerization is very long, and the use of solvent asks the recovery of n-hexane, with supplementary costs.

Other methods are known for the obtaining of other inorganic- organic polymer nanocomposite
- One method proposes the polymerization of acrylonitrile in mesoporous silica: mesoporous silica is imbibited with acrylonitrile by ultrasonication during 5-30 minutes, then left without ultrasonication 24-72 hours , then again submitted to ultrasonication 5-90 minute and then polymerized at 65 °C, during 24 hours, without ultrasonication [9]. In a variant, the imbibition of silica with acrylonitrile takes place 1 hour in ultrasonication bath, then 24 hours without ultrasonication and again 1 hours with ultrasonication, after which the polymerization takes place at 65 °C, without ultrasonication [10]. The method has the drawback tha uses as inorganic host mesoporous silica from serpentinite, which has a disorder porous structure. Also the polymerization takes place without sonication. Both these features, as well as pore dimensions of the mesoporous silica and its chemical nature, does not allow a good homogeneity of the composite, and the desired high resistance to compression
- Another method proposes the use of silica or zeolites in combination with polyvinylacetate instead of polyacrylonitrile [11,12]. The imbibition of silica or zeolites takes place in ultrasonic field 1 hour, then without sonication 24 hours and then again with sonication 1 hour, followed by polymerization without ultrasonication during 24 hours at 80 °C. The main disadvantage of this method is that the lack of ultrasonication during the polymerization stage does not assures the needed homogeneity of the composite. Moreover, the known tendency to ramification of the polyvinylacetate does not impart the high resistance to compression of the composite.

Ultrasonication is a method which improves the penetration of solvents and monomers in porous structures. In this direction a method is known for the polyadition in solution of a diamide with a dianhydride in the presence of single wall nanotubes, in ultrasonication field [13]. This method has the main drawbacks that uses an expensive material (single wall nanotubes) and the polyadition reaction in solution leads to films, which cannot be used as materials with high resistance to compression.

### Summary of the Invention

The technical problem that is solved by this invention consists in utilising the radical polymerization as synthesis system and ensuring the compositional homogeneity by firstly performing the zeolite imbibition with a monomer solution in an ultrasonic field, and then performing the polymerization, also in ultrasonic field, in the absence of oxygen, the obtained bodies being removed from the moulds and maintained in air for drying.

According to this invention the procedure eliminates the disadvantages of above procedures by that the necessary quantity of natural clinoptilolite or synthetic HZSM-5 zeolite and a solution with 0.5-1.5% concentration of azobisisobutyronitrile in acrylonitrile, are introduced in a mould, so that the solid: liquid ratio will be 1:0.75- 1:1.25 wt: volum, the mould atmosphere is desaerated (made inert) by purging with nitrogen during 10-20 minutes, then the mould is tightly sealed and introduced in a ultrasonication bath, with water, at room temperature (25 °C), where it is left for 1-3 hours for imbibition, then the mould is introduced in another ultrasonication bath at 65-70 °C, where it is kept for polymerization for 18-24 hours, after which the mould is removed from the ultrasonic bath and left at room temperature for cooling, the hybrid polymer nanocomposite being removed from the mould and allowed to dry in air, in normal conditions, for 20-24 hours

The invention has the following advantages:
- uses cheap raw materials as natural or synthetic zeolites and a well known commercial monomer: acrylonitrile;
- avoids working with very pure substances and in anhydrous medium, thus avoiding the investment and exploitation costs for the materials drying;
- production costs are reduced because it is not necessary the treating phase with expensive wetting agents;
- provides a high compositional and structural uniformity of hybrid inorganic-organic nanocomposite, by performing both imbibition and polymerization stages in ultrasonic fields;
- allows tailoring of mechanical resistance at compression of materials according to solid: liquid ratio and working conditions.

Below are presented examples of the invention:

### Example 1

In a mould with 50 mL capacity and one neck are introduced 20 g clinoptilolite and 15 mL 0.5% solution of azobisisobutyronitrile (AIBN) in acrylonitrile (AN). Through the mould neck is introduced a little plastic tube (catheter) attached to a nitrogen (99.9%) source and nitrogen purge proceeds during 10 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 1 hour, for zeolite imbibition with monomer and initiator solution. After that the mould is introduced in another ultrasonication bath that contains water at the temperature of 65 °C, constantly maintained by recirculation from an ultra thermostat bath. Polymerization in ultrasonic field takes place during 18 hours. After polymerization the mould is removed from the ultrasonic bath and maintained in air for cooling, at room temperature. Then the solid product is removed from the mould and maintained in air, in normal conditions, for 20 hours. The obtained nanocomposite presents a compressive strength of 3.2 MPa.

### Example 2

In a mould with 50 mL capacity and one neck are introduced 20 g clinoptilolite and 25 mL 1.5% solution of azobisisobutyronitrile (AIBN) in acrylonitrile (AN). Through the mould neck is introduced a little plastic tube (catheter) attached to a nitrogen (99.9%) source and nitrogen purge proceeds during 20 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 3 hour, for zeolite imbibition with monomer and initiator solution. After that the mould is introduced in another ultrasonication bath that contains water at the temperature of 70 °C, constantly maintained by recirculation from an ultra thermostat bath. Polymerization in ultrasonic field takes place during 24 hours. After polymerization the mould is removed from the ultrasonic bath and maintained in air for cooling, at room temperature. Then the solid product is removed from the mould and maintained in air, in normal conditions, for 24 hours. The obtained nanocomposite presents a compressive strength of 4.0 MPa.

### Example 3

In a mould with 50 mL capacity and one neck are introduced 20 g clinoptilolite and 20 mL 1.0% solution of azobisisobutyronitrile (AIBN) in acrylonitrile (AN). Through the mould neck is introduced a little plastic tube (catheter) attached to a nitrogen (99.9%) source and nitrogen purge proceeds during 20 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 2 hours, for zeolite imbibition with monomer and initiator solution. After that the mould is introduced in another ultrasonication bath that contains water at the temperature of 68 °C, constantly maintained by recirculation from an ultra thermostat bath. Polymerization in ultrasonic field takes place during 24 hours. After polymerization the mould is removed from the ultrasonic bath and maintained in air for cooling, at room temperature. Then the solid product is removed from the mould and maintained in air, in normal conditions, for 24 hours. The obtained nanocomposite presents a compressive strength of 4.5 MPa.

### Example_4

In a mould with 50 mL capacity and one neck are introduced 20 g synthetic zeolite (HZSM-5) and 15 mL 0.5% solution of azobisisobutyronitrile (AIBN) in acrylonitrile (AN). Through the mould neck is introduced a little plastic tube (catheter) attached to a nitrogen (99.9%) source and nitrogen purge proceeds during 10 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 1 hour, for zeolite imbibition with monomer and initiator solution. After that the mould is introduced in another ultrasonication bath that contains water at at the temperature of 65 °C, constantly maintained by recirculation from an ultra thermostat bath. Polymerization in ultrasonic field takes place during 20 hours. After polymerization the mould is removed from the ultrasonic bath and maintained in air for cooling, at room temperature. Then the solid product is removed from the mould and maintained in air, in normal conditions, for 20 hours. The obtained nanocomposite presents a compressive strength of 4.3 MPa.

### Example 5

In a mould with 50 mL capacity and one neck are introduced 20 g synthetic zeolite (HZSM-5) and 25 mL 1.5% solution of azobisisobutyronitrile (AIBN) in acrylonitrile (AN). Through the mould neck is introduced a little plastic tube (catheter) attached to a nitrogen (99.9%) source and nitrogen purge proceeds during 20 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 3 hour, for zeolite imbibition with monomer and initiator solution. After that the mould is introduced in another ultrasonication bath that contains water at the temperature of 70 °C, constantly maintained by recirculation from an ultra thermostat bath. Polymerization in ultrasonic field takes place during 22 hours. After polymerization the mould is removed from the ultrasonic bath and maintained in air for cooling, at room temperature. Then the solid product is removed from the mould and maintained in air, in normal conditions, for 24 hours. The obtained nanocomposite presents a compressive strength of 4.5 MPa.

### Example 6

In a mould with 50 mL capacity and one neck are introduced 20 g synthetic zeolite (HZSM-5) and 20 mL 1.0% solution of azobisisobutyronitrile (AIBN) in acrylonitrile (AN). Through the mould neck is introduced a little plastic tube (catheter) attached to a nitrogen (99.9%) source and nitrogen purge proceeds during 15 minutes. Then the catheter is removed from the mould and the mould is tightly sealed, for example with a rubber hose sealed with a Hoffman clamp or with another sealing system. The mould is introduced in an ultrasonication bath, containing water at room temperature (25 °C), where is maintained for 2 hours, for zeolite imbibition with monomer and initiator solution. After that the mould is introduced in another ultrasonication bath that contains water at at the temperature of 68 °C, constantly maintained by recirculation from an ultra thermostat bath. Polymerization in ultrasonic field takes place during 24 hours. After polymerization the mould is removed from the ultrasonic bath and maintained in air for cooling, at room temperature. Then the solid product is removed from the mould and maintained in air, in normal condition, for 24 hours. The obtained nanocomposite presents a compressive strength of 4.7 MPa.

## Claims

1. Process for the obtaining of high resistant to compression and having structural uniformity hybrid polymer nanocomposites, **characterized by** that the necessary quantity of natural clinoptilolite or syntetic HZSM-5 zeolite and a solution with 0.5-1.5% concentration of azobisisobutyronitrile in acrylonitrile are introduced in a mould, so that the solid: liquid ratio will be 1:0.75- 1:1.25 wt:volum, the mould atmosphere is desaerated (made inert) by purging with nitrogen during 10-20 minutes, then the mould is tightly sealed and introduced in a ultrasonication bath, with water, at room temperature (25 °C), where it is left for 1-3 hours for imbibition, then the mould is introduced tin another ultrasonication bath at 65-70 °C, where it is kept for polymerization for 18-24 hours, after which the mould is removed from the ultrasonic bath and left at room temperature for cooling, the hybrid polymer nanocomposite being removed from the mould and allowed to dry in air, in normal conditions, for 20-24 hours.

## Patentansprüche

1. Verfahren zur Herstellung eines Kompression hochresistente Polymere Hybrides mit einheitlicher Struktur, charakterisiert dadurch dass natürlichen clinoptilolite oder des synthetischen HZSM-5 und einer Lösung mit der Konzentration von 0,6-1,6 % azobisisobutyronitrile in acrylonitrile in eine Form gegeben werden, so dass das Verhältnis Feststoff zu Flüssig bei 1:0,75 bis 1:1,25 Volumen Anteilen liegt. Die Form wird Inertisiert unter Stickstoff Fluss für 10-20 Minuten, danach ist wird die Form dicht verschlossen und In einem ultasonischenn Wasser Bad bei Raum Temperatur (26 " C), für 1-3 Stunden galssen, danach wird die Form in ein weiteres ultrasonisches Wasser Bad bei 65-70 ° C für 18-24 Stunden gestellt um den Polimerisations Prozess zu Vervolständigen. Danach wird die Form zum Kühlen bei Raumtemperatur gelasssen. Das nanocomposite Polymer kann dann herausgenommen werden und bei Raum Temperatur für 20-24 Stunden getrocknet werden.

## Revendications

1. Procédé pour l'obtention des nanocomposites polymériques hybrides à haute résistance à la compression ayant une uniformité structurelle, **caractérisée par le fait qu'**on Introduit dans un moule la quantité nécessaire de clinoptilolite naturel ou de zéolite synthétique HZSM-5 et une solution d'azobisisobutyronitrile dans de l'acrylonitrile ayant la concentration de 0.5 - 1.5%, de morte que le rapport solide: liquide soit de 1: 0.75 à 1: 1.25 en masse: volume. L'atmosphère du moule est désaérée (rendue inerte) en purgeant avec de l'azote pendant 10 - 20 minutes, puis le moule est fermé de façon étanche et Introduit dans un bain à ultrasons, avec de l'eau, à température ambiante (25 C), où il est laissé pendant 1 - 3 heures pour l'imbibition, puis le moule est introduit dans un autre basin à ultrasons à 65-70 °C, où Il est maintenu 18 - 24 heures pour la polymérisation. Par la suite, le moule est retiré du bain ultrasonique et laissé à température ambiante pour se refroidir, le nanocomposite polymerique hybride étant retiré du moule et laissé sécher à l'air, dans des conditions normales, pendant 20-24 heures.
